# EUROPEAN PATENT APPLICATION

(11) **EP 2 166 400 A1**
(43) Date of publication of application: **24.03.2010**
(21) Application number: 09169995.9
(22) Date of filing: 10.09.2009
(51) Int. Cl.: G02B 27/01

(54) **Head up display having a combiner with a variable light transmission**

(30) Priority: 18.09.2008 JP 2008239979
(71) Applicant: Kabushiki Kaisha Toshiba, Tokyo 105-8001 (JP)
(72) Inventor: Nagahara, Osamu, Tokyo 105-8001 (JP); Katagiri, Takato, Tokyo 105-8001 (JP); Okumura, Haruhiko, Tokyo 105-8001 (JP); Sasaki, Takashi, Tokyo 105-8001 (JP); Hotta, Aira, Tokyo 105-8001 (JP); Horiuchi, Kazuo, Tokyo 105-8001 (JP); Ogawa, Masatoshi, Tokyo 105-8001 (JP); Hagiwara, Tsuyoshi, Tokyo 105-8001 (JP); Matsubayashi, Toshiaki, Tokyo 105-8001 (JP)
(74) Representative: Henkel, Feiler & Hänzel

(57) **Abstract**

A head up display according to an embodiment of the present invention includes a display information generating module (32) which generates information that should be projected, a combiner (21) which guides the information that is generated by the display information generating module and should be displayed to a predetermined position, a light adjustment control module (22) which changes a transmitted light amount of the combiner based on brightness of a background and front image detecting module (24) which detects brightness of the background to set the transmitted light amount of the combiner by using the light adjustment control module.

## Description

The present invention relates to a head up display that is mounted in a vehicle that travels based on driving by a driver and can inform about, e.g., a traveling speed or a situation of the vehicle without requesting the driver to change his/her line of sight.

A long time has passed since a driving support apparatus called a head up display (HUD) that displays information required for driving on a driver's line of sight was put to practical use in, e.g., a vehicle that travels based on driving by the driver.

Using the head up display (HUD) enables the driver to acquire (visually confirm) information required for traveling, e.g., a speed or navigation without changing his/her line of sight leading to a far front side to a near side.

Japanese Patent Application Publication (KOKAI) No. Hei 3-227738 discloses that a transmission amount of light of a combiner (the HUD) is varied in accordance with a change in luminance of an external background.

However, a projected picture, i.e., information displayed by the HUD is exposed to complicated display conditions, e.g., not only a change in luminance of the external background but also a color of a vehicle present ahead or presence/absence of a vehicle provided ahead at the time of traveling at night.

Therefore, acquisition of display with excellent visibility under more conditions is desired.

An object of the present invention to provide an HUD (a head-up display) which enables display that does not fatigue a user even in long-time utilization without reducing visibility due to brightness (luminance) or a color of a region corresponding to a background of a projected picture.

According to an aspect of the invention, there is provided a head up display characterized by comprising:
a display information generating module (32) which generates information to be projected; a combiner (21) which guides the information to be displayed that is generated by the display information generating module to a predetermined position; a transmitted light amount adjusting module (22) which changes a transmitted light amount of the combiner based on brightness of a background; and a brightness detection module (24) which detects brightness of the background to set the transmitted light amount of the combiner by the transmitted light amount adjusting module (22).

The invention can be more fully understood from the following detailed description when taken in conjunction with the accompanying drawings, in which:
FIG. 1 is an exemplary diagram showing an example of an in-vehicle head up display (HUD) according to an embodiment of the invention to which an example of an embodiment of the present invention can be applied;
FIG. 2A is an exemplary diagram showing an example where the HUD shown in FIG. 1 is arranged in an actual vehicle, according to an embodiment of the invention;
FIG. 2B is an exemplary diagram showing an example of a relationship between the HUD shown in FIG. 1 and a line of sight of a driver, according to an embodiment of the invention;
FIGS. 3A to 3C are exemplary diagrams each showing an example where a combiner (a light adjustment sheet) is placed on a windshield according to an embodiment of the invention;
FIG. 4 is a graph showing an example of a relationship between a control amount for an intensity of light (a transmitted light amount) transmitted through the combiner (the light adjustment sheet) and "external light (brightness of a background field of view)" of the HUD shown in FIGS. 1, 2A, and 2B according to an embodiment of the invention;
FIG. 5 is an exemplary diagram showing an example where a liquid crystal panel is used as the combiner of the HUD according to an embodiment of the invention; and
FIG. 6 is an exemplary diagram showing an example where the combiner gradually changes an intensity of light transmitted therethrough in the HUD shown in FIG. 5 according to an embodiment of the invention.

Embodiments of the invention will be explained in detail hereinafter with reference to the accompanying drawings. The various modules of the systems described herein can be implemented as software applications, hardware and/or software modules, or components on one or more computers, such as servers. While the various modules are illustrated separately, they may share some or all of the same underlying logic or code.

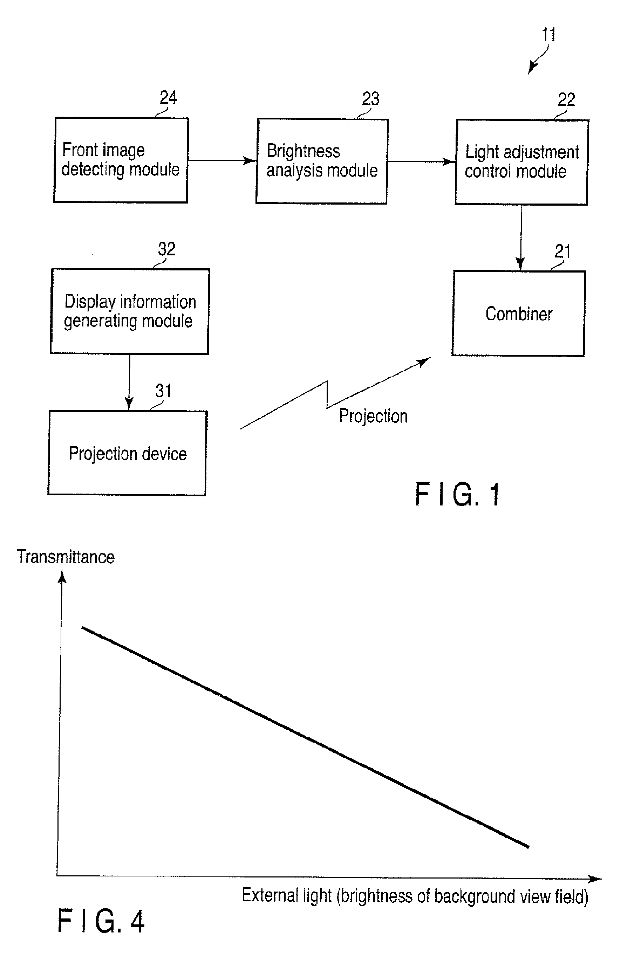

FIG. 1 shows an outline of an in-vehicle head up display (which is a driving support apparatus and will be referred to as an HUD hereinafter) to which an embodiment of the present invention can be applied.

An HUD 101 generally includes a combiner 21 provided at a predetermined position on a windshield of a vehicle, a projection device 31 that projects a picture (display information) as a display target onto the combiner 21, and a mirror 40 that guides a picture from the projection device 31 to the combiner. It is to be noted that the combiner is called the HUD in some cases but all structures will be generically explained as the HUD in this embodiment.

The projection device 31 projects toward the combiner 21 a picture as a display target generated by display information generating module 32, i.e., a traveling speed or various kinds of warning display that should be projected onto the combiner 21, various kinds of data or map information that are planned to be displayed based on a variety of prepared applications, and others.

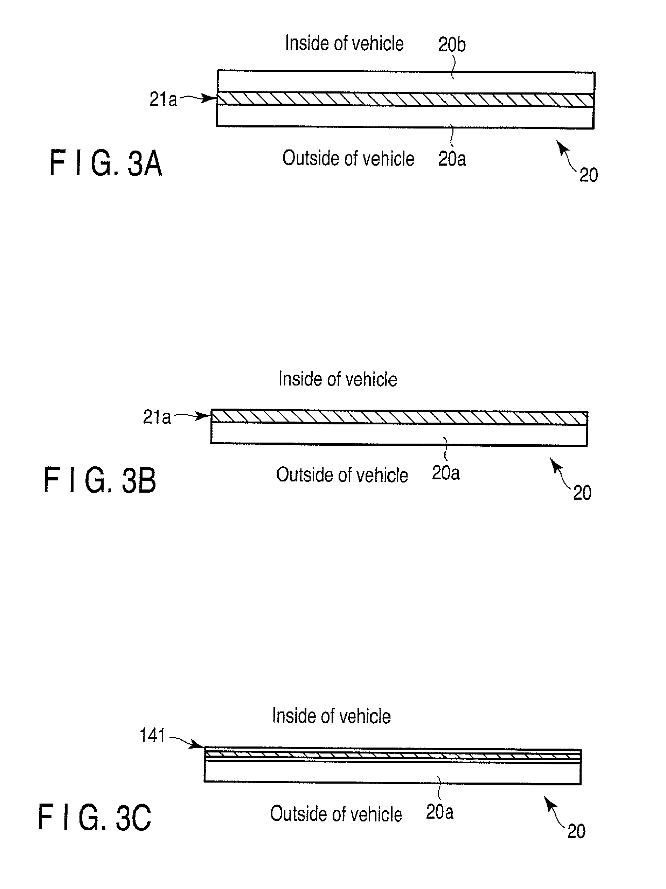

The combiner 21 is, e.g., a light adjustment sheet that can vary a transmitted light amount by dispersing oriented particles between two PET films (polyethylene terephthalate) and arranging droplets each having a diameter of several µm, and it is prepared on an inner side of glass used for a windshield as represented by an example shown in, e.g., FIG. 3(b). It is to be noted that a transparent electroconductive layer having a fixed level or a higher level of a transmitted light amount assured therein is formed on a surface of each PET film (a surface that does not come into contact with the oriented particles) utilized for the light adjustment sheet, and the transmitted light amount can be arbitrarily set in accordance with a magnitude of a voltage supplied to the electroconductive layer through a light adjustment control module 22.

The light adjustment control module 22 sets the light transmission amount of the combiner 21 based on various factors which are expected to affect visibility of display information when the display information is projected onto the combiner 21, e.g., brightness in front of a vehicle detected by a non-illustrated camera prepared at a predetermined position ahead of the vehicle or front image detecting module 24 as typified by a brightness sensor. Incidentally, it is known that the brightness in front of the vehicle greatly fluctuates due to, e.g., weather (fine weather and rain), a clock time (e.g., a day and a night, or incidence of sunlight on a driver's eye), illumination light from an oncoming vehicle at the time of traveling at night, or reflected light from fallen snow in winter. Further, in regard to a color of a vehicle present ahead, it is known that visibility varies with respect to a whitish color of a coating material in particular.

A brightness analysis module 23 sets an adjustment value that should be set as the transmitted light amount of the combiner 21 based on various factors that are expected to affect visibility of display information when the display information is projected onto the combiner 21.

It is to be noted that the brightness analysis module 23 specifies a predetermined control amount (an adjustment value) for a reduction in transmitted light amount of the combiner 21 with respect to the light adjustment control module 22 based on "external light (brightness of a background field of view)" detected by the front image detecting module 24 when, e.g., a color of a vehicle present ahead is a whitish color, the weather is fine (in bright daylight), or no vehicle is present ahead at night and illumination light from an oncoming vehicle is superimposed on a line of sight (of a driver).

It is needless to say that the brightness analysis module 23 specifies a predetermined control amount (an adjustment value) required to moderate a degree of increase or reduction in transmitted light amount of the combiner 21 with respect to the light adjustment control module 22 when, e.g., a color of a vehicle present ahead is a dark color, it rains, or a vehicle having a non-whitish color is traveling at night most recently.

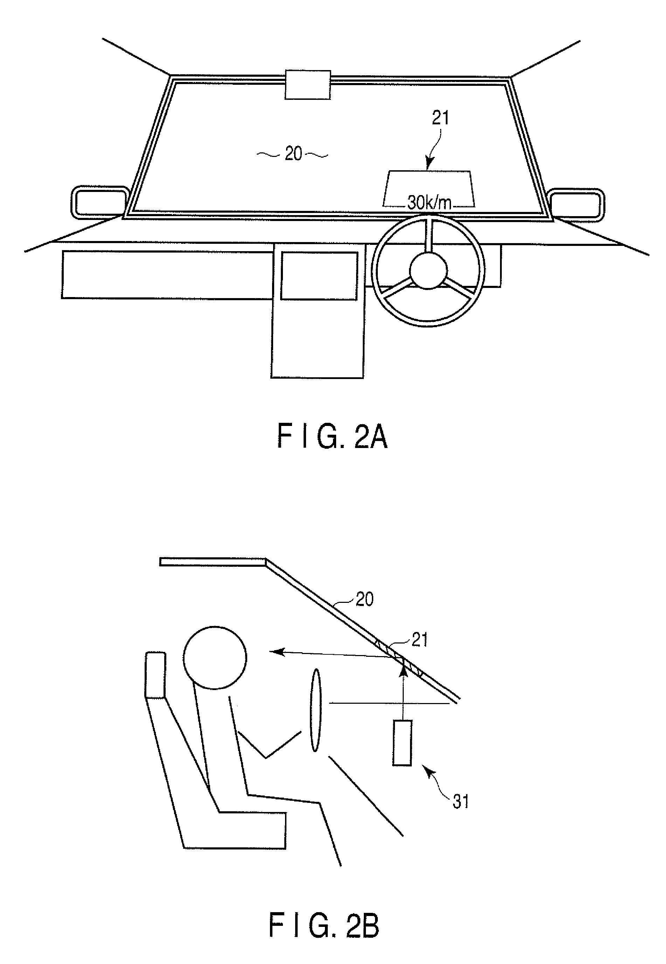

FIGS. 2A and 2B show an example where the in-vehicle head-up display depicted in FIG. 1 is arranged in an actual vehicle.

As shown in FIGS. 2A and 2B, the combiner 21 is provided at a predetermined position on a windshield 20 of the vehicle on a driver's side.

Furthermore, the front image detecting module 24 is preferably provided at a predetermined position on a front side of a non-illustrated vehicle which is called a front grille, e.g., near a cooling air intake unit or a headlight, or a predetermined position on the inner side of the windshield 20 depicted in FIG. 2B.

Since the HUD 11 itself has been already extensively utilized, its detailed explanation will be omitted. However, in many cases, the projection device 31 is provided at a position outside a field of view of a driver, and display information, i.e., a projected picture exiting the projection device 31 is reflected by the combiner 21 provided on the windshield 20 to be superimposed on a sight light of the driver.

It is to be noted that a brightness sensor or a camera is used as the front image detecting module 24 as explained above. When the front image detecting module 24 is, e.g., a camera or an image detection device, it is useful for confirming whether a vehicle is present ahead or for specifying a color of a vehicle present ahead.

The brightness analysis module 23 (see FIG. 1) sets a transmitted light amount of the combiner 21 to a transmitted light amount (a transmittance) that can be specified from preset correction characteristics, e.g., such a relationship between "external light (brightness of a background field of view)" and "a transmittance" as represented by an example depicted in FIG. 4 based on brightness outside the vehicle or a color of a vehicle present ahead detected by the sensor or the camera (an image detection device). Incidentally, it is needless to say that the light adjustment control module 22 sets an adjustment value of a voltage that should be output to the combiner in accordance with the transmittance.

Furthermore, FIG. 4 shows a transmitted light amount based on "external light (brightness of a background field of view)" and a "transmittance", but "brightness of a background field of view" can be substituted by, e.g., a color of a vehicle present ahead or a luminance of illumination light from an oncoming vehicle.

FIGS. 3A to 3C are exemplary diagrams each showing an example where a combiner (a light adjustment sheet) is placed on a windshield according to an embodiment of the invention.

As shown in FIG. 3A, for example, when the windshield 20 has a conformation which is generally called a laminated glass and in which an "intermediate member (an adhesive or a pressure-sensitive adhesive sheet)" is placed between a first glass (on an out-of-vehicle side) 20a and a second glass (an in-vehicle side) 20b, the combiner 21 can be readily fitted on a vehicle by using the light adjustment sheet for a part (or all) of the intermediate member.

Moreover, as shown in FIG. 3B, the combiner 21 can be easily fitted on the vehicle when it is attached to the glass 20a on the inner side of the glass 20a as a main body of the windshield 20.

Incidentally, it is needless to say that a known liquid crystal panel 141 may be provided in place of the light adjustment sheet.

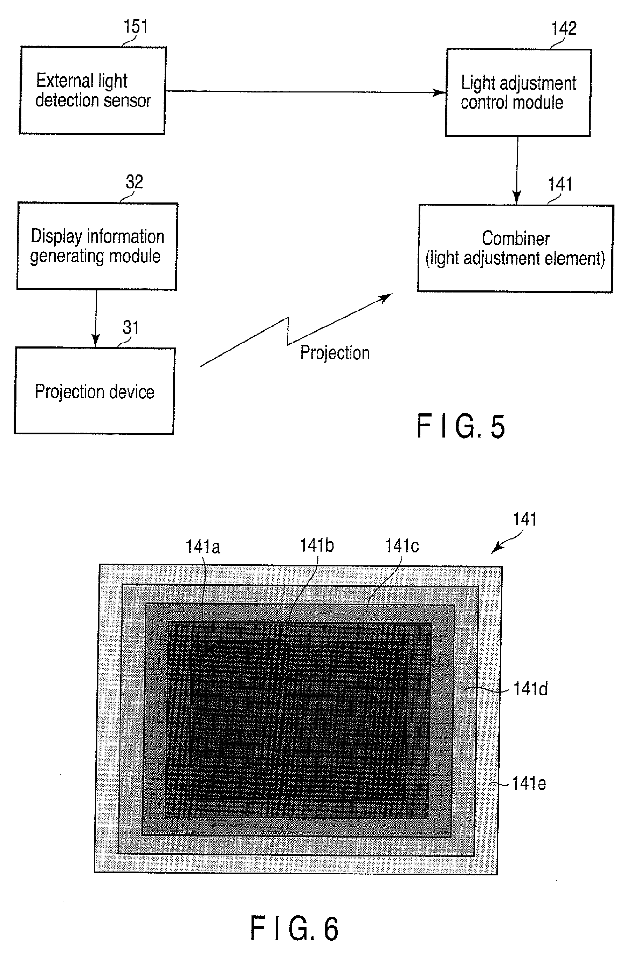

FIG. 5 shows an outline of an HUD including a display control system that is preferably applied when the liquid crystal panel exemplified in FIG. 3C is used as a combiner.

An HUD 111 shown in FIG. 5 corresponds to an example using the liquid crystal panel 141 as the combiner. In regard to an intensity of light that should be transmitted by the liquid crystal panel 141 therethrough, front image detecting module may be substituted by a brightness (light volume) sensor 151 that can detect an intensity of "external light" as compared with the example explained with reference to FIG. 1. The light adjustment control unit 142 sets the light transmission amount of the liquid crystal panel 141 based on various factors which are expected to affect visibility of display information when the display information is projected onto the liquid crystal panel 141, e.g., brightness in front of a vehicle detected by the brightness (light volume) sensor 151. In this case, it is needless to say that a cost of the entire apparatus can be reduced as compared with the example using the image detecting module.

FIG. 6 shows an example of a more preferable light adjustment (transmitted light amount control) method when the liquid panel exemplified in FIG. 3C is used in place of the light adjustment sheet.

The liquid crystal panel 141 can control a transmitted light amount in accordance with each arbitrary area of the panel.

Therefore, when a plurality of frame-like regions are specified concentrically or from a central region toward the outside and a transmitted light amount is gradually increased from the central region toward the outside (a transmission amount of light transmitted through a portion near the center in light transmitted through the combiner is aggressively reduced), display information can be projected onto the light crystal panel 141 used as the combiner without causing a driver to vividly feel presence of the combiner. It is to be noted that the example having five stages (141a to 141e) is shown in FIG. 6 for convenience's sake, but it is needless to say that a division number or a partition shape can be arbitrarily set.

As explained above, according to an embodiment of the present invention, a projected image, i.e., information displayed by the HUD is superimposed on a line of sight of a driver without degrading visibility of the driver in an excellent (easily viewable) display state where a transmitted light amount of the combiner is sequentially controlled under complicated display conditions, e.g., not only a change in luminance of an external background, a color of a vehicle present ahead, or presence/absence of a vehicle ahead at the time of traveling at night.

As a result, the head-up display that can perform display without fatiguing a user even in long-time utilization is provided. Additionally, it is often the case that a camera or the like as the front image detecting module is prepared in such a vehicle as to be provided with the HUD, and a cost of the apparatus is not increased.

## Claims

1. A head up display **characterized by** comprising:
a display information generating module (32) which generates information to be projected;
a combiner (21) which guides the information to be displayed that is generated by the display information generating module to a predetermined position;
a transmitted light amount adjusting module (22) which changes a transmitted light amount of the combiner based on brightness of a background; and
a brightness detection module (24) which detects brightness of the background to set the transmitted light amount of the combiner by the transmitted light amount adjusting module (22).

2. The head up display according to claim 1, **characterized in that** by the combiner includes a light adjustment sheet or a light crystal panel having a variable transmitted light amount.

3. The head up display according to claim 2, **characterized in that** the combiner is integrally formed on a windshield.

4. The head up display according to claim 2, **characterized in that** the combiner is formed on a windshield from an in-vehicle side.

5. The head up display according to claim 2, **characterized in that** the transmitted light amount of the combiner is changed based on an intensity of illumination light from an oncoming vehicle.

6. The head up display according to claim 1, **characterized in that** the transmitted light amount of the combiner is partially or gradually variable.

7. The head up display according to claim 6, **characterized in that** the combiner includes a liquid crystal display.

8. The head up display **characterized by** comprising:
a display information generating module (32) which generates projection information;
a projecting module (31) which projects display information generated by the display information generating module;
a combiner (21) which reflects the display information generated by the display information generating module toward a driver from a front glass to be superimposed on a line of sight of the driver by using the projecting module;
a detecting module (24) which detects brightness of the outside of a field of view of the driver; and
a brightness adjusting module (23) which changes brightness of the information generated by the display information generating module and projected onto the combiner based on the brightness of the outside of the field of view of the driver detected by the detecting module.

9. The head up display according to claim 8, **characterized in that** wherein the brightness of the display information that is generated by the generating module and projected onto the combiner is changed based on an intensity of illumination light from an oncoming vehicle.
